# FASCICULE DE BREVET EUROPEEN

(11) **EP 1 942 327 B1**
(45) Date de publication et mention de la délivrance du brevet: **30.03.2011**
(21) Numéro de dépôt: 07123609.5
(22) Date de dépôt: 19.12.2007
(51) Int. Cl.: G01M 3/20

(54) **Dispositif et procédé de détection rapide de fuites**
Vorrichtung und Verfahren zur Schnellerkennung von Leckagen
Device and method for the quick detection of leaks

(30) Priorité: 03.01.2007 FR 0752511
(43) Date de publication de la demande: 09.07.2008
(73) Titulaire: Alcatel Lucent, 75008 Paris (FR)
(72) Inventeur: Larcher, Jean-Eric, 74940, ANNECY LE VIEUX (FR)
(74) Mandataire: Sogan, Gloria

(56) Documents cités:
- WO-A-2004/097363
- WO-A-2004/106882
- DE-A1- 19 638 506
- US-A- 5 107 697
- US-A- 5 561 240

## Description

La présente invention concerne un dispositif et un procédé de contrôle de l'étanchéité d'un objet.

L'invention peut s'appliquer à tous types d'objets, mais plus spécialement à des objets creux dans lesquels il est aisé de faire le vide.

On connaît déjà des dispositifs permettant de détecter la présence d'un gaz de test présent dans l'atmosphère intérieure d'un objet soumis à ce gaz de test présent dans l'atmosphère extérieure.

Les procédés les plus couramment utilisés se déroulent de la façon suivante : l'objet à tester est connecté à un dispositif de contrôle de l'étanchéité ; un vide est créé dans le couple objet à tester/dispositif de contrôle de l'étanchéité; on soumet l'objet à tester à un gaz de test présent dans l'atmosphère extérieure ; le défaut d'étanchéité est ensuite détecté par le dispositif de contrôle d'étanchéité qui recherche, dans son atmosphère intérieure, la présence du gaz de test.

On connaît un premier dispositif de détection de fuites d'un objet à tester, dans lequel un objet est relié à un analyseur de gaz et est relié à un système de pompage par une conduite munie d'un moyen de contrôle de flux. On soumet l'objet au gaz de test. En cas de présence de fuites, le gaz s'introduit dans l'atmosphère intérieure de l'objet par différence de pression entre l'atmosphère intérieure et l'atmosphère extérieure de l'objet. Le gaz de test se propage dans l'analyseur de gaz qui en détecte la présence. Ceci est communément appelé détection en mode direct.

La détection d'une petite fuite nécessite de disposer d'un analyseur de gaz très sensible. On prévoit ainsi des analyseurs de gaz de type analyseur de gaz à filament, tels qu'un spectromètre de masse ou un quadripôle. Mais ce type d'analyseur nécessité de travailler à pression très basse, de l'ordre de 10⁻³ à 10⁻⁴ mbar.

Le temps d'attente pour réaliser le vidage suffisant de l'objet jusqu'à atteindre la pression très basse, permettant le fonctionnement de l'analyseur de gaz, dépend du volume de l'objet et du système de pompage. Un dispositif de pompage à faible débit conduit à un temps de pompage important, ce qui rend un tel dispositif inutilisable pour des objets à tester de grand volume. If faut aussi un dispositif de pompage capable de descendre dans la gamme des très basses pressions nécessaires,

On a alors associé une pompe primaire et une pompe secondaire afin de diminuer le temps de pompage et de diminuer ainsi le temps d'attente avant de pouvoir réaliser la détection de la fuite.

Le temps d'attente est toutefois très long avec un tel système, et on risque en permanence de dégrader le filament de l'analyseur de gaz en cas de fonctionnement à une pression trop élevée.

Un autre dispositif de détection de fuites, est divulgué dans le document US-4,472,962, qui propose un dispositif comprenant une pompe à vide primaire connectée à l'objet à tester et une pompe à vide secondaire de type turbomoléculaire ayant une aspiration connectée à un analyseur de gaz pour détecter la présence d'un gaz de test dans l'atmosphère intérieure de l'objet. Un piquage intermédiaire dans la pompe à vide turbomoléculaire est connecté à l'objet à tester. Le gaz de test indicatif d'une fuite s'écoule à partir de l'objet à tester dans le piquage intermédiaire de la pompe secondaire. La majorité du gaz de test est expulsée par la pompe turbomoléculaire et par la pompe primaire pour être rejetée dans l'atmosphère, Le reste du gaz de test se propage à contre-flux dans la pompe turbomoléculaire jusqu'à atteindre l'analyseur de gaz.

Un tel dispositif présente l'avantage de réduire le temps d'attente pour réaliser la détection des fuites. En effet, il suffit d'abaisser la pression dans l'objet jusqu'à la pression intermédiaire normale présente dans la zone de pompe turbomoléculaire correspondant au piquage intermédiaire, et de connecter alors l'objet au piquage intermédiaire : le gaz de test éventuel est alors détecté. Puisque la pression intermédiaire est plus grande que la pression de fonctionnement de l'analyseur de gaz, le temps d'attente, ou temps de pompage nécessaire pour atteindre la pression intermédiaire, est réduit.

Cependant, ce système reste encore insuffisant pour détecter des défauts d'étanchéité dans des objets de volumes importants.

Afin d'augmenter encore davantage la sensibilité et de réduire le temps d'attente, le document US-5,561,240 propose un dispositif de détection de fuite ayant deux piquages intermédiaires sur une pompe turbomoléculaire. Chaque piquage correspond a un taux de compression différent dans la pompe. Une vanne est disposée sur chacun des piquages. Le vide est fait progressivement dans l'objet et dans le dispositif de détection de fuite. On expose l'objet à tester à un gaz de test. On effectue le pompage tout d'abord par la pompe primaire, puis à travers le piquage inférieur de la pompe secondaire, enfin par le piquage supérieur de la pompe secondaire. Les piquages sont ouverts en succession, c'est-à-dire l'un après l'autre, et à aucun moment les deux piquages ne sont ouverts simultanément. La détection de fuites se fait également en contre-flux. L'ouverture successive des vannes des piquages est réalisée par l'intermédiaire d'un contrôleur recevant un signal de mesure de pression dans la conduite principale par un appareil de mesure de pression.

Un tel dispositif offre l'avantage de réduire le temps d'attente avant la détection ainsi que d'améliorer la sensibilité de la détection. Cependant le temps d'attente reste trop long lors du test d'objets de grand volume.

Pour augmenter la sensibilité de la mesure, un autre dispositif, divulgué dans le, document US-5,585,548, propose de conserver une différence de pression entre la cellule d'analyse et la conduite d'aspiration, en disposant une restriction sur le piquage intermédiaire du détecteur de fuite contre-flux.

L'utilisation d'un tel dispositif présente l'inconvénient d'être limité à la détection de fuite dans de petits volumes.

Avec les dispositifs de l'art antérieur, le temps d'attente nécessaire avant de pouvoir détecter des fuites est dépendant du volume de l'objet à tester. Plus l'objet est volumineux, plus le temps d'attente sera long.

Pour réduire le temps d'attente et permettre ainsi une détection plus rapide de fuites, il est possible d'augmenter la taille des pompes ou bien d'augmenter les conductances du circuit en utilisant des canalisations et des vannes de plus grand diamètre. Mais ces modifications ne sont pas satisfaisantes car elles conduisent à des dispositifs plus chers et plus encombrants.

Le problème posé par la présente invention est d'assurer une détection rapide de fuites dans un objet exposé à un gaz de test présent dans l'atmosphère extérieure, sans augmenter l'encombrement du dispositif par rapport aux dispositifs de l'art antérieur, et sans affecter la sensibilité de la détection.

Pour atteindre ces buts ainsi que d'autres, l'invention propose un dispositif de détection de fuites par mesure à contre-flux pour contrôler l'étanchéité d'un objet exposé à un gaz de test, comprenant :
- une pompe secondaire multiétagée, ayant une pluralité d'accès d'aspiration dont un accès d'aspiration secondaire et au moins un accès d'aspiration intermédiaire correspondant à un taux de compression intermédiaire dans la pompe secondaire multiétagée,
- un détecteur de gaz de test connecté à l'accès d'aspiration secondaire,
- un système de pompage primaire ayant une aspiration connectée à un refoulement de la pompe secondaire multiétagée et apte à être connectée à l'objet par l'intermédiaire d'un moyen de contrôle de flux,
- au moins une conduite intermédiaire munie d'un moyen de contrôle de flux intermédiaire et apte à connecter l'objet à l'accès d'aspiration intermédiaire de la pompe secondaire muitiétagée,
- une conduite d'entrée directe munie d'un moyen de contrôle de flux d'entrée et apte à connecter l'objet à l'accès d'aspiration secondaire de la pompe secondaire multiétagée ou au détecteur de gaz de test,
- des moyens de commande électroniques, pour commander les moyens de contrôle de flux, et produisant au moins une séquence de pompage à haut débit au cours de laquelle au moins deux moyens de contrôle de flux reliés aux accès d'aspiration correspondants de la pompe secondaire multiétagée sont maintenus en ouverture simultanée.

Ceci a pour effet que l'on obtient une réponse fiable du détecteur de fuite plus rapidement qu'avec les dispositifs de l'art antérieur, car le pompage à haut débit permet d'abaisser plus vite la pression dans l'objet à tester. De plus, l'encombrement du dispositif selon l'invention n'est pas augmenté par rapport aux dispositifs de l'art antérieur.

En pratique, on peut prévoir que le dispositif peut être tel que :
- on prévoit une conduite principale ayant une entrée de connexion adaptée pour être connectée à l'objet,
- le système de pompage primaire est adapté pour refouler a la pression atmosphérique, et a une entrée d'aspiration primaire connectée à la conduite principale par l'intermédiaire d'un moyen de contrôle de flux primaire,
- un moyen de contrôle de flux secondaire est interposé entre le refoulement de la pompe secondaire multiétagée et l'entrée d'aspiration primaire du système de pompage primaire,
- ladite au moins une conduite intermédiaire connecte l'accès d'aspiration intermédiaire à la conduite principale,
- on prévoit un dispositif de mesure de pression adapté pour mesurer la pression gazeuse dans la conduite principale et. pour produire un signal de mesure de pression,
- les moyens, de commande, électroniques sont adaptés pour commander l'ouverture des moyens de commande de flux en fonction du signal de mesure de pression, selon un programme de commande enregistré produisant ladite au moins une sèquence de pompage à haut débit.

Un tel dispositif selon l'invention possède avantageusement une architecture simple et peu onéreuse, et qui n'ajoute pas de volume à pomper supplémentaire par rapport aux dispositifs de l'art antérieur. La réponse du dispositif de contrôle d'étanchéité est ainsi rapide.

Selon un autre aspect, l'invention propose un procédé de détection de fuites par mesure à contre-flux, dans lequel on pompe les gaz d'un objet par une pompe primaire et par une pompe secondaire multiétagée munie d'une pluralité d'accès d'aspiration dont un accès d'aspiration secondaire et au moins un accès d'aspiration intermédiaire correspondant à un taux de compression intermédiaire dans la pompe secondaire multiétagée, caractérisé en ce qu'il comprend au moins une étape de pompage à haut débit au cours de laquelle au moins deux accès d'aspiration de la pompe secondaire multiétagée sont raccordés à l'objet à tester.

L'effet avantageux est que l'on obtient une réponse fiable du détecteur de fuite plus rapidement qu'avec les procédés de l'art antérieur.

De plus, le procédé peut être mis en oeuvre avec un dispositif dont l'encombrement n'est pas augmenté par rapport aux dispositifs de l'art antérieur.

D'autres objets, caractéristiques et avantages de la présente invention ressortiront de la description suivante de modes de réalisation particuliers, faite en relation avec les figures jointes, parmi lesquelles :
- la figure 1 illustre schématiquement une réalisation pratique d'un dispositif de contrôle d'étanchéité selon un mode de réalisation de la présente invention ;
- la figure 2 illustre graphiquement la descente en pression P en millibars en fonction du temps T en minutes, d'un objet à tester au cours d'un procédé de la présente invention ;
- la figure 3 est un organigramme des étapes successives de fonctionnement du dispositif selon la figure 1.

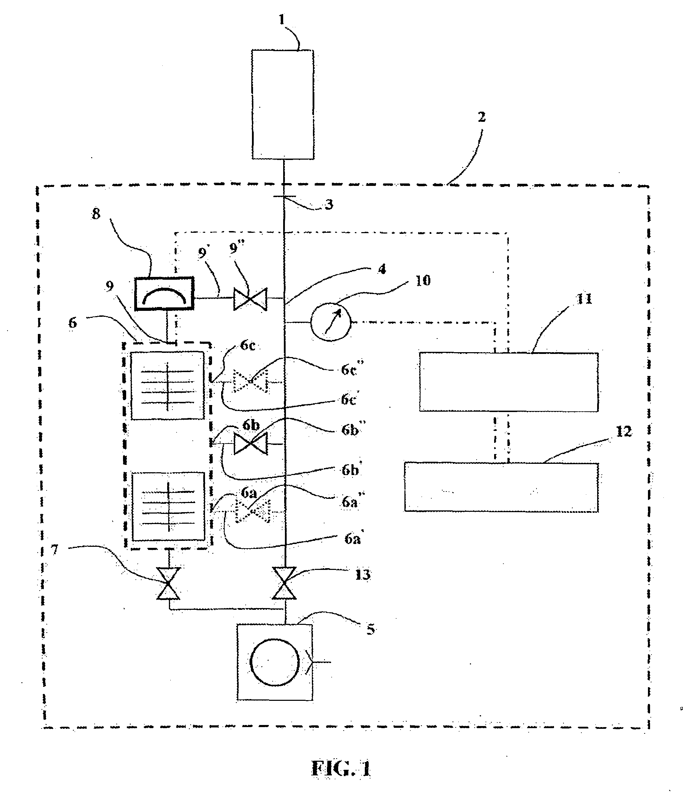

Dans le mode de réalisation illustré sur la figure 1, le dispositif de détection de fuites **2** selon l'invention est utilisé pour détecter les fuites d'un objet **1**.

Une pompe primaire **5** est connectée à l'objet **1** par un moyen de connexion **3** et par une conduite principale **4** munie d'un moyen de contrôle de flux primaire **13**. Cette pompe primaire **5** refoule à la pression atmosphérique. De façon avantageuse, cette pompe primaire **5** peut avantageusement être une pompe à membrane, pompe habituelle dans les laboratoires.

Une pompe secondaire multiétagée **6** refoule à l'entrée d'aspiration de la pompe primaire **5** par l'intermédiaire d'un moyen de contrôle de flux secondaire **7**. Une entrée d'aspiration secondaire **9** de la pompe secondaire multiétagée **6** est connectée à un détecteur de gaz **8**.

Cette pompe secondaire multiétagée **6** est avantageusement une pompe moléculaire, turbomoléculaire ou hybride, de façon à assurer un vide adéquat pour permettre la détection par le dispositif selon l'invention. Ce type de pompe multiétagée augmente avantageusement les possibilités d'adaptation à des volumes différents d'objets.

Dans le mode de réalisation lustré sur la figure 1, la pompe secondaire multiétagée **6** possède au moins trois accès d'aspiration intermédiaires **6a**, **6b**, **6c** associés à trois conduites intermédiaires **6a', 6b', 6c'** et à trois moyens de contrôle de flux intermédiaires **6a", 6b", 6c".** Ces conduites intermédiaires **6a', 6b', 6c'** relient la pompe secondaire multiétagée 6 à la conduite principale **4**.

Le détecteur de gaz 8 est avantageusement un détecteur de gaz à filament, qui peut avantageusement être un spectromètre de masse, un quadripôle ou autre. Ce type de détecteur de gaz permet de réaliser une mesure avec une très grande sensibilité. La pression de fonctionnement adéquate dans le détecteur de gaz **8** est d'environ de 10⁻³ à 10⁻⁴ mbar pour que le filament ne soit pas endommagé.

Dans le mode de réalisation illustré, on prévoit également que le dispositif **2** de contrôle de fuites comprend en outre une conduite d'entrée directe **9'** munie d'un moyen de contrôle de flux d'entrée **9"** et apte à connecter l'objet **1** à l'accès d'aspiration secondaire **9** de la pompe secondaire multiétagée **6** ou au détecteur de gaz de test **8.**

Le dispositif **2** de contrôle de fuites comprend des moyens de commande électroniques **11**, pour le pilotage et la mesure, comportant par exemple un processeur associé à une mémoire contenant un programme enregistré. Les moyens de commande **11** reçoivent les signaux de pression générés par un dispositif de mesure de pression **10** apte à mesurer la pression gazeuse P dans la conduite principale **4**. Les moyens de commande 11 sont couplés à un système d'affichage **12**, avantageusement un écran d'ordinateur, pour afficher le résultat des tests de fuite.

Les moyens de contrôle de flux **6a", 6a", 6c", 7, 9"** et **13,** qui sont par exemple des électrovannes d'isolement de type tout ou rien, sont tous pilotés par les moyens de commande électroniques **11**. Les moyens de contrôle de flux **6a", 6b", 6c", 7, 9"** et 13 peuvent être chacun ouverts ou fermés avec une grande rapidité, selon un programme enregistré déterminé.

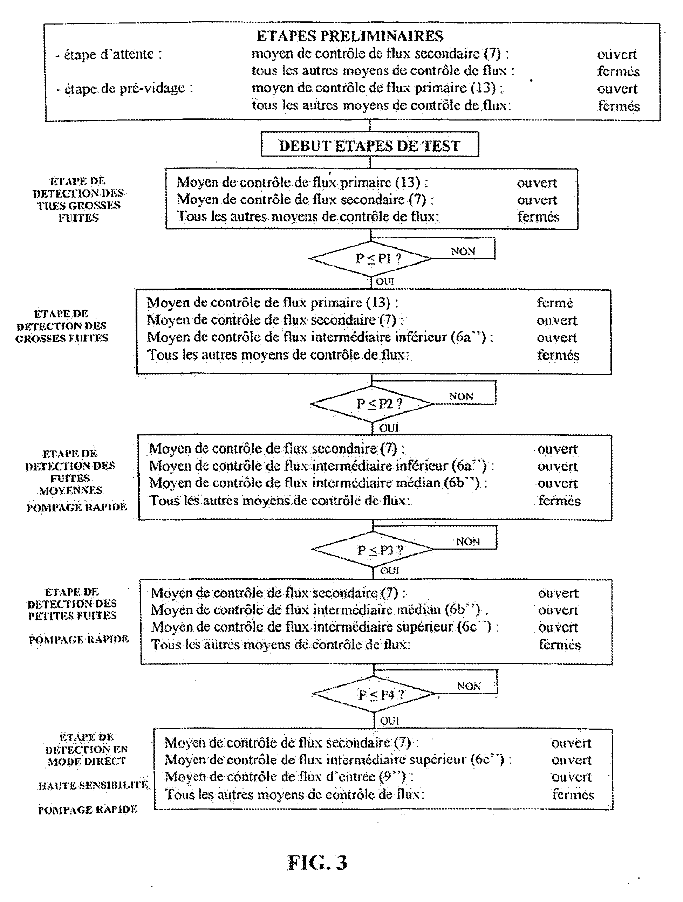

Le programme enregistré commande l'ouverture et la fermeture des moyens de contrôle de flux **6a", 6b", 6c", 7, 9"** et 13 en fonction de la pression P mesurée par le dispositif de mesure de pression 10. Les opérations d'ouverture ou de fermeture des divers moyens de contrôle de flux **6a", 6b", 6c",** 7, 9" et 13 s'effectuent lorsque les moyens de commande électroniques 11 constatent que la pression P atteint l'un de plusieurs seuils de pression déterminès P1-P4 (figure 3).

On va maintenant décrire le fonctionnement du dispositif **2** de test de la figure 1, en considérant l'organigramme de la figure 3. La recherche des fuites pourra, par exemple, être effectuée au cours de plusieurs périodes réparties tout au long du processus de pompage dans l'objet **1** connecté à la conduite principale **4** par le moyen de connexion **3**.

Lors d'étapes préliminaires, on prévoit que le programme de commande enregistré comprend :
- une séquence d'attente, définissant une étape d'attente au cours de laquelle, parmi les éléments de contrôle de flux, seul le moyen de contrôle de flux secondaire **7** est ouvert, pour que les pompes primaires **5** et secondaire **6** maintiennent un vide approprié (10⁻³ à 10⁻⁴ mbar) dans le détecteur de gaz de test 8 et dans la pompe secondaire multiétagée **6,**
- une séquence de prévidage, définissant une étape de prévidage au cours de laquelle seul le moyen de contrôle de flux primaire **13** est ouvert, pour assurer le prévidage de l'objet **1**, et à l'issue de laquelle on ouvre le moyen de contrôle de flux secondaire 7 lorsque la pression dans l'objet **1** est devenue suffisamment basse pour un fonctionnement correct de la pompe secondaire multiétagée **6**.

On poursuit le pompage en maintenant ouverts les moyens de contrôle de flux primaire 13 et secondaire **7**, en contrôlant la pression P dans la conduite principale **4.**

L'objet **1** est exposé à un gaz de test présent dans l'atmosphère extérieure. En cas de défaut d'étanchéité, par différence de pression, le gaz de test va pénétrer dans l'atmosphère intérieure de l'objet à tester 1. Ce gaz de test va se propager dans le dispositif **2** de détection de fuites.

On peut prévoir simultanément une première étape de test de fuite en cas d'une très grosse fuite, une quantité; décelable de gaz de test peut remonter à contre-flux la totalité de la pompe secondaire multiétagée **6** et être alors détectée par le détecteur de gaz **8.**

Tant que le dispositif de mesure de pression **10** n'a pas atteint un premier seuil de pression P1 (fig. 3) dépendant du dispositif, rien n'est modifié.

Dans le mode de réalisation particulier de la figure 1, ce premier seuil de pression P1 (fig. 3) se trouve à environ 20 mbar.

Si le gaz de test n'a pas été détecté, on poursuit le pompage en modifiant pour cela l'état du dispositif ; on ferme le moyen de contrôle de flux primaire **13**, on ouvre le moyen de contrôle de flux intermédiaire inférieur **6a"** de la pompe secondaire multiétagée **6,** tout en maintenant ouvert le moyen de contrôle de flux secondaire **7** et en maintenant fermés tous les autres moyens de contrôle de flux. Cet état est maintenu jusqu'à un second seuil de pression P2 (fig. 3). Le gaz de l'atmosphère intérieure de l'objet **1** et de la conduite principale **4** passe dans la pompe secondaire multiétagée **6** et est majoritairement évacué vers la pompe primaire **5**. La proportion de gaz restant remonte en contre-flux vers le détecteur de gaz **8.** Le pompage s'effectue à vitesse normale. Au cours de ce pompage, on peut prévoir une seconde étape de test de fuite : en cas de grosses fuites, une quantité décelable de gaz de test peut remonter en contre-flux et être détectée par le détecteur de gaz **8**.

Dans le mode de réalisation particulier de la figure 1, le second seuil de pression P2 (fig. 3) se trouve à environ 0,5 mbar.

C'est à partir de l'étape qui suit que le dispositif selon l'invention diffère des dispositifs de l'art antérieur.

Si le gaz de test n'a pas encore été détecté, on poursuit le pompage en modifiant encore pour cela l'état du dispositif : on prévoit qu'au moins deux moyens de contrôle de flux soient maintenus en ouverture simultanée. De préférence, ces moyens de contrôle de flux doivent correspondre à des taux de compression assez proches l'un de l'autre dans la pompe secondaire multiétagée 6.

On ouvre donc le moyen de contrôle de flux intermédiaire médian **6b"**, en maintenant les autres moyens de contrôle de flux dans leur état précédent. Ainsi les moyens de contrôle de flux intermédiaire inférieur **6a"** et médian **6b"** sont simultanément en position ouverte, de sorte que l'on combine les deux débits disponibles des accès d'aspiration inférieur **6a** et médian **6b**. Pour deux accès d'aspiration ouverts simultanément, les débits se cumulent sans trop dégrader la sensibilité du mode de détection. En effet, comme les deux accès d'aspiration inférieur **6a** et médian **6b** correspondent à des taux de compression assez proches l'un de l'autre, la sensibilité du contrôle de l'étanchéité n'est pas dégradée. Une partie décelable du gaz de test remonte vers le détecteur de gaz **8**. Pour effectuer une mesure à contre-flux, seule la quantité de gaz remontant vers le détecteur de gaz **8** est considérée. Cette étape est poursuivie jusqu'à ce que la pression dans la conduite principale **4** atteigne le troisième seuil de pression P3 (fig. 3). Le pompage s'effectue à grande vitesse. Au cours de ce pompage, on peut prévoir une troisième étape de test de fuite : en cas de fuites moyennes, une quantité décelable de gaz de test peut remonter en contre-flux et être détectée par le détecteur de gaz **8**.

Dans le mode de réalisation particulier de la figure 1, le troisième seuil de pression P3 (fig. 3) est d'environ 0,1 mbar.

Si le gaz de test n'a pas encore été détecté, on poursuit le pompage en modifiant encore pour cela l'état du dispositif : on ferme le moyen de contrôle de flux intermédiaire inférieur **6a"** et on ouvre le moyen de contrôle de flux intermédiaire supérieur **6c".** Ainsi, les moyens de contrôle de flux intermédiaire médian **6b"** et supérieur **6c"** sont maintenus ouverts simultanément. La détection de petites fuites peut alors être effectuée par une mesure à contre-flux, et le pompage est rapide.

Cet état est maintenu jusqu'à un quatrième seuil de pression P4 (fig. 3).

Dans le mode de réalisation particulier de la figure 1, le quatrième seuil de pression P4 est d'environ 0,01 mbar.

Pour une mesure à haute sensibilité, les moyens de contrôle de flux d'entrée **9"** et intermédiaire supérieur **6c"** sont maintenus en ouverture simultanée alors que le moyen de contrôle de flux intermédiaire médian **6b"** est fermé. La détection de petites fuites peut être effectuée par une mesure à contre-flux, et le pompage est rapide.

Le programme de commande électronique **11** peut comprendre en outre une séquence de test en mode direct à très haute sensibilité, au cours de laquelle seuls le moyen de contrôle de flux d'entrée **9"** et le moyen de contrôle de flux secondaire **7** sont ouverts. Cela permet un dernier test de fuite à sensibilité maximale.

Les moyens de commande électronique **11** prévoient les étapes en figure 3.

La simultanéité de l'ouverture de plusieurs accès d'aspiration de la pompe secondaire multiétagée **6** augmente le débit de pompage de l'atmosphère intérieure de l'objet **1** à tester et du dispositif **2** de détection de fuites.

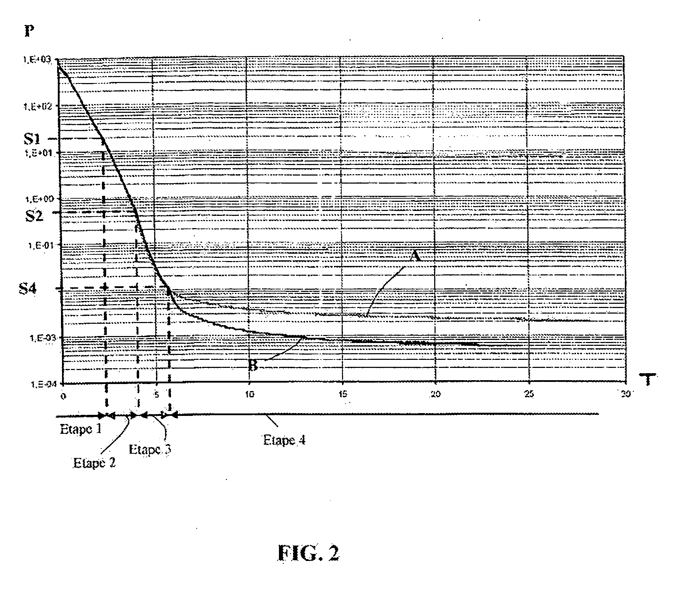

La figure 2 propose un graphique comparatif de la descente en pression pour un objet de 12,5 litres, entre un dispositif de l'art antérieur et le dispositif selon l'invention.

Dans le mode de réalisation particulier utilisé pour la comparaison illustrée sur la figure 2, le dispositif **2** de détection de fuites selon l'invention possède une pompe secondaire multiétagée **6** avec seulement deux accès d'aspiration intermédiaires **6a** et **6b** tels que ceux illustrés sur la figure **1****.**

La première étape correspond à la séquence de prévidage.

Dès que la pression dans la conduite principale **4** atteint une pression seuil S1, le moyen de contrôle de flux **6a"** est ouvert par les moyens de commande électronique 11, pour effectuer la deuxième étape.

Dans ce mode de réalisation particulier de la figure 1, ce premier seuil de pression S1 (fig. 2) se trouve à environ 20mbar. S1 (fig. 2) correspond à P1 (fig. 3).

Lorsque la pression dans la conduite principale 4 atteint une pression seuil S2, le moyen de contrôle de flux intermédiaire **6b"** est ouvert par les moyens de commande électronique **11** tandis que le moyen de contrôle de flux intermédiaire **6a"** est fermé. On effectue ainsi la troisième étape.

Dans le mode de réalisation particulier de la figure 1, le second seuil de pression S2 (fig. 2) se trouve à environ 0,5 mbar.

Dès que la pression dans la conduite principale **4** atteint le seuil de pression S4 (fig. 2), on prévoit qu'au moins lesdits deux moyens de contrôle de flux **6b", 9"** soient maintenus en ouverture simultanée, et on effectue ainsi la quatrième étape. De préférence, ces moyens de contrôle de flux **6b", 9"** doivent correspondre à des taux de compression assez proches l'un de l'autre dans la pompe secondaire multiétagée **6.**

Dans ce mode de réalisation particulier de la figure 1, le seuil de pression S4 (fig. 2) se trouve à environ 0,01 mbar. S4 (fig. 2) correspond à P4 (fig. 3).

On remarque que, pendant les trois premières étapes, la descente en pression est sensiblement équivalente pour le dispositif de l'art antérieur et pour le dispositif selon l'invention. Les débits de pompage sont semblables, car le dispositif **2** de détection de fuites est dans ce cas utilisé simplement en mode de détection à haute sensibilité, et non en mode de détection avec pompage à haut débit.

A partir de la quatrième étape, les courbes **A** et **B** de la descente en pression diffèrent, et l'on remarque alors aisément que le dispositif selon ce mode de réalisation de l'invention est avantageux par rapport au dispositif de l'art antérieur. En effet, la descente en pression **B** dans le dispositif selon le mode de réalisation de l'invention est plus rapide et de meilleure qualité que la descente en pression **A** de l'art antérieur. Pour la qualité, avec le dispositif selon le mode de réalisation de l'invention, on atteint un vide d'environ 6.10⁴ mbar alors qu'avec le dispositif de l'art antérieur le maximum de vide atteint une valeur 2.10⁻³ mbar. Pour la rapidité, une pression de 5.10⁻³ mbar est atteinte en environ 7,5 minutes avec le dispositif de l'art antérieur, et en environ 6 minutes seulement avec le dispositif selon le mode de réalisation de l'invention.

## Revendications

1. Dispositif de détection de fuites par mesure à contre-flux pour contrôler l'étanchéité d'un objet (1) exposé à un gaz de test, comprenant :
- une pompe secondaire multietagée (6), ayant une pluralité d'accés d'aspiration (9, 6a, 6b, 6c) dont un accès d'aspiration secondaire (9) et au moins un accés d'aspiration intermédiaire (6b) correspondant a un taux de compression intermédiaire dans la pompe secondaire multiétagée (6),
- un détecteur de gaz de test (8) connecté à l'accès d'aspiration secondaire (9),
- un système de pompage primaire (5) ayant une aspiration connectée à un refoulement de la pompe secondaire multiétagée (6) et apte à être connectée à l'objet (1) par l'intermédiaire d'un moyen de contrôle de flux (13),
- au moins une conduite intermédiaire (6b') munie d'un moyen de contrôle de flux intermédiaire (6b") et apte à connecter l'objet (1) à l'accès d'aspiration intermédiaire (6b) de la pompe secondaire multiétagée (6),
- une conduite d'entrée directe (9') munie d'un moyen de contrôle de flux d'entrée (9") et apte à connecter l'objet (1) á l'accès d'aspiration secondaire (9) de la pompe secondaire multiétagée (6) ou au détecteur de gaz de test (8),
- des moyens de commande électroniques (11) pour commander les moyens de contrôle de flux (6b", 9", 13),
**caractérisé en ce que** les moyens de commande électroniques (11) produisent au moins une séquence de pompage à haut débit au cours de laquelle au moins deux moyens de contrôle de flux (6b", 9") reliés aux accès d'aspiration correspondants (6b, 9) de la pompe secondaire multiétagée (6) sont maintenus en ouverture simultanée.

2. Dispositif selon la revendication 1, dans lequel :
- on prévoit une conduite principale (4) ayant une entrée de connexion adaptée pour être connectée à l'objet (1).
- le système de pompage primaire (5) est adapté pour refouler à la pression atmosphérique, et a une entrée d'aspiration primaire connectée à la conduite principale (4) par l'intermédiaire du moyen de contrôle de flux primaire (13),
- un moyen de contrôle de flux secondaire (7) est interposé entre le refoulement de la pompe secondaire multiétagée (6) et l'entrée d'aspiration primaire du système de pompage primaire (5),
- ladite au moins une conduite intermédiaire (6b') connecte l'accès d'aspiration intermédiaire (6b) à la conduite principale (4),
- on prévoit un dispositif de mesure de pression (10) adapté pour mesurer la pression gazeuse dans la conduite principale (4) et pour produire un signal de mesure de pression.
- les moyens de commande électroniques (11) sont adaptés pour commander l'ouverture des moyens de commande de flux (6b", 9") en fonction du signal de mesure de pression, selon un programme de commande enregistré produisant ladite au moins une séquence de pompage à haut débit.

3. Dispositif selon la revendication 2, **caractérisé en ce que** le programme de commande enregistré comprend en outre
- une séquence d'attente, définissant une étape d'attente au cours de laquelle, parmi les éléments de contrôle de flux, seul le moyen de contrôle de flux, secondaire (7) est ouvert, pour maintenir un vide approprié dans la pompe secondaire multiétagée (6) et dans le détecteur de gaz de test (8),
- une séquence de prévidage, définissant une étape de prévidage au cours de laquelle seul le moyen de contrôle de flux primaire est ouvert (13), pour assurer le prévidage de l'objet (1), et à l'issue de laquelle on ouvre le moyen de contrôle de flux secondaire (7).

4. Dispositif selon l'une quelconque des revendications 1 à 3, **caractérisé en ce que** la pompe secondaire multiétagée (6) est une pompe moléculaire, une pompe turbomoléculaire, ou une pompe hybride.

5. Dispositif selon l'une quelconque des revendications 1 à 4, **caractérisé en ce que** la pompe secondaire multiétagée (6) comprend au moins trois accès d'aspiration intermédiaires (6a, 6b, 6c) associés à trois conduites intermédiaire (6a', 6b', 6c') et à trois moyens de contrôle de flux intermédiaires (6a", 6b", 6c").

6. Dispositif selon l'une quelconque des revendications 1 à 5, **caractérisé en ce que** lesdits au moins deux moyens de contrôle de flux (6b', 9") dont on commande le maintien en ouverture .simultanée correspondent à des taux de compression assez proches l'un de l'autre dans la pompe secondaire multiétagée (6).

7. Dispositif selon l'une quelconque des revendications 1 à 6, **caractérisé en ce que** le détecteur de gaz de test (8) est de type détecteur de gaz à filament.

8. Dispositif selon l'une quelconque des revendications 1 à 7, **caractérisé en ce que** le détecteur de gaz de test (8) est un spectromètre de masse ou un quadripôle.

9. Dispositif selon l'une quelconque des revendications 1 à 8, **caractérisé en ce que** le programme de commande électronique (11) comprend en outre une séquence de test en mode direct au cours de laquelle seuls le moyen de contrôle de flux d'entrée (9") et le moyen de contrôle de flux secondaire (7) sont ouverts.

10. Procédé de détection de fuites par mesure à contre-flux, dans lequel on pompe les gaz d'un objet (1) par une pompe secondaire multiétagée et une pompe primaire (5) connectée à un refoulement de la pompe secondaire multiétagée, la pompe secondaire multiétagée (6) étant munie d'une pluralité d'accès d'aspiration (9, 6a, 6b, 6c) dont un accès d'aspiration secondaire (9) et au moins un accès intermédiaire (6b) correspondant à un taux de compression intermédiaire dans la pompe secondaire multiétagée (6), **caractérisé en ce qu'**il comprend au moins une étape de pompage à haut débit au cours de laquelle au moins deux accès d'aspiration (9, 6b) de la pompe secondaire multiétagée (6) sont raccordés à l'objet à tester (1).

## Claims

1. Device for detecting leaks by counterflow measurement in order to check the sealing of an object (1) exposed to a test gas, comprising:
- a multi-stage secondary pump (6) having a plurality of suction ports (9, 6a, 6b, 6c) including one secondary suction port (9) and at least one intermediate suction port (6b) corresponding to an intermediate compression ratio in the multi-stage secondary port (6),
- a test gas detector (8) connected to the secondary suction port (9),
- a primary pumping system (5) having a suction element connected to a discharge element of the multi-stage secondary pump (6) and being capable of being connected to the object (1) by means of a flow-control means (13),
- at least one intermediate duct (6b') furnished with an intermediate flow-control means (6b") and capable of connecting the object (1) to the intermediate suction port (6b) of the multi-stage secondary pump (6),
- a direct inlet duct (9') furnished with an inlet flow-control means (9") and capable of connecting the object (1) to the secondary suction port (9) of the multi-stage secondary pump (6) or to the test gas detector (8),
- electronic control means (11) for controlling the flow-control means (6b", 9", 13), **characterized in that** the electronic control means (11) produce at least one high-rate pumping sequence during which at least two flow-control means (6b", 9") connected to the corresponding suction ports (6b, 9) of the multi-stage secondary pump (6) are kept open simultaneously.

2. Device according to Claim 1, in which:
- a main duct (4) is provided having a connection inlet suitable for being connected to the object (1),
- the primary pumping system (5) is suitable for discharging at atmospheric pressure, and has a primary suction inlet connected to the main duct (4) by means of the primary flow-control means (13),
- a secondary flow-control means (7) is interposed between the discharge element of the multi-stage secondary pump (6) and the primary suction inlet of the primary pumping system (5),
- the said at least one intermediate duct (6b') connects the intermediate suction port (6b) to the main duct (4),
- a pressure-measuring device (10) is provided that is suitable for measuring the gas pressure in the main duct (4) and for producing a pressure-measurement signal,
- the electronic control means (11) are suitable for controlling the opening of the flow-control means (6b", 9") depending on the pressure-measurement signal, according to a saved control programme producing the said at least one high-rate pumping sequence.

3. Device according to Claim 2, **characterized in that** the saved control programme also comprises:
- a waiting sequence, defining a waiting step during which, amongst the flow-control elements, only the secondary flow-control means (7) is open, in order to maintain an appropriate vacuum in the multi-stage secondary pump (6) and in the test gas detector (8),
- a pre-draining sequence, defining a pre-draining step during which only the primary flow-control means (13) is open, in order to ensure the pre-draining of the object (1), and after which the secondary flow-control means (7) is opened.

4. Device according to any one of Claims 1 to 3, **characterized in that** the multi-stage secondary pump (6) is a molecular pump, a turbomolecular pump or a hybrid pump.

5. Device according to any one of Claims 1 to 4, **characterized in that** the multi-stage secondary pump (6) comprises at least three intermediate suction ports (6a, 6b, 6c) associated with three intermediate ducts (6a', 6b', 6c') and with three intermediate flow-control means (6a", 6b", 6c").

6. Device according to any one of Claims 1 to 5, **characterized in that** the said at least two flow-control means (6b", 9") for which simultaneous holding open is commanded correspond to compression ratios that are fairly close to one another in the multi-stage secondary pump (6).

7. Device according to any one of Claims 1 to 6, **characterized in that** the test gas detector (8) is of the filament gas detector type.

8. Device according to any one of Claims 1 to 7, **characterized in that** the test gas detector (8) is a mass spectrometer or a quadrupole.

9. Device according to any one of Claims 1 to 8, **characterized in that** the electronic control programme (11) also comprises a test sequence in direct mode during which only the inlet flow-control means (9") and the secondary flow-control means (7) are open.

10. Method for detecting leaks by counterflow measurement, in which the gases are pumped from an object (1) via a multi-stage secondary pump and a primary pump (5) connected to a discharge element of the multi-stage secondary pump, the multi-stage secondary pump (6) being furnished with a plurality of suction ports (9, 6a, 6b, 6c) including one secondary suction port (9) and at least one intermediate port (6b) corresponding to an intermediate compression ratio in the multi-stage secondary pump (6), **characterized in that** it comprises at least one high-rate pumping step during which at least two suction ports (9, 6b) of the multi-stage secondary pump (6) are connected to the object (1) to be tested.

## Patentansprüche

1. Vorrichtung zum Detektieren von Lecks durch Gegenstrommessung, um die Dichtigkeit eines mit einem Testgas beaufschlagten Objekts (1) zu kontrollieren, mit:
- einer mehrstufigen Sekundärpumpe (6), die mehrere Sauganschlüsse (9, 6a, 6b, 6c) besitzt, wovon ein sekundärer Sauganschluss (9) und wenigstens ein Zwischensauganschluss (6b) einem Zwischenverdichtungsverhältnis in der mehrstufigen Sekundärpumpe (6) entsprechen,
- einem Testgasdetektor (8), der mit dem sekundären Sauganschluss (9) verbunden ist,
- einem Primärpumpsystem (5), das einen Sauganschluss besitzt, der mit einem Förderanschluss der mehrstufigen Sekundärpumpe (6) verbunden ist und mit dem Objekt (1) über ein Strömungssteuermittel (13) verbunden werden kann,
- wenigstens einer Zwischenleitung (6b'), die mit einem Zwischenströmungssteuermittel (6b") versehen ist und das Objekt (1) mit dem Zwischensauganschluss (6b) der mehrstufigen Sekundärpumpe (6) verbinden kann,
- einer direkten Eingangsleitung (9'), die mit einem Eingangsströmungssteuermittel (9") versehen ist und das Objekt (1) mit dem sekundären Sauganschluss (9) der mehrstufigen Sekundärpumpe (6) oder mit dem Testgasdetektor (8) verbinden kann,
- elektronischen Steuermitteln (11), um die Strömungssteuermittel (6b", 9", 13) zu steuern,
**dadurch gekennzeichnet, dass** die elektronischen Steuermittel (11) wenigstens eine Pumpsequenz mit hohem Durchsatz erzeugen, in der wenigstens zwei Strömungssteuermittel (6b", 9"), die mit entsprechenden Sauganschlüssen (6b, 9) der mehrstufigen Sekundärpumpe (6) verbunden sind, gleichzeitig offen gehalten werden.

2. Vorrichtung nach Anspruch 1, wobei:
- eine Hauptleitung (4) vorgesehen ist, die einen Verbindungseingang besitzt, der dazu ausgelegt ist, mit dem Objekt (1) verbunden zu werden,
- das primäre Pumpsystem (5) dazu ausgelegt ist, mit Atmosphärendruck zu fördern, und einen primären Saugeingang besitzt, der mit der Hauptleitung (4) über das primäre Strömungssteuermittel (13) verbunden ist,
- ein sekundäres Strömungssteuermittel (7) zwischen die Förderseite der mehrstufigen sekundären Pumpe (6) und den primären Saugeingang des primären Pumpsystems (5) eingefügt ist,
- die wenigstens eine Zwischenleitung (6b') den Zwischensauganschluss (6b) mit der Hauptleitung (4) verbindet,
- eine Druckmessvorrichtung (10) vorgesehen ist, die dazu ausgelegt ist, den Gasdruck in der Hauptleitung (4) zu messen und ein Druckmesssignal zu erzeugen,
- die elektronischen Steuermittel (11) dazu ausgelegt sind, das Öffnen der Strömungssteuermittel (6b", 9") als Funktion des Druckmesssignals in Übereinstimmung mit einem aufgezeichneten Steuerprogramm zu steuern, das die wenigstens eine Pumpsequenz mit hohem Durchsatz erzeugt.

3. Vorrichtung nach Anspruch 2, **dadurch gekennzeichnet, dass** das aufgezeichnete Steuerprogramm außerdem enthält:
- eine Wartesequenz, die einen Warteschritt definiert, in dem von den Strömungssteuerelementen nur das sekundäre Strömungssteuermittel (7) geöffnet ist, um in der mehrstufigen Sekundärpumpe (6) und in dem Testgasdetektor (8) ein geeignetes Vakuum aufrechtzuerhalten,
- eine Vorevakuierungssequenz, die einen Vorevakuierungsschritt definiert, in dem nur das primäre Strömungssteuermittel geöffnet ist (13), um die Vorevakuierung des Objekts (1) sicherzustellen, wobei an ihrem Ende das sekundäre Strömungssteuermittel (7) geöffnet wird.

4. Vorrichtung nach einem der Ansprüche 1 bis 3, **dadurch gekennzeichnet, dass** die mehrstufige Sekundärpumpe (6) eine Molekularpumpe, eine Turbomolekularpumpe oder eine Hybridpumpe ist.

5. Vorrichtung nach einem der Ansprüche 1 bis 4, **dadurch gekennzeichnet, dass** die mehrstufige Sekundärpumpe (6) wenigstens drei Zwischensauganschlüsse (6a, 6b, 6c) aufweist, die drei Zwischenleitungen (6a', 6b', 6c') und drei Zwischenströmungssteuermitteln (6a", 6b", 6c") zugeordnet sind, enthält.

6. Vorrichtung nach einem der Ansprüche 1 bis 5, **dadurch gekennzeichnet, dass** die wenigstens zwei Strömungssteuermittel (6b", 9"), die so gesteuert werden, dass sie gleichzeitig offen gehalten werden, ausreichend nahe beieinander liegenden Verdichtungsverhältnissen in der mehrstufigen Sekundärpumpe (6) entsprechen.

7. Vorrichtung nach einem der Ansprüche 1 bis 6, **dadurch gekennzeichnet, dass** der Testgasdetektor (8) vom Typ Faden-Gasdetektor ist.

8. Vorrichtung nach einem der Ansprüche 1 bis 7, **dadurch gekennzeichnet, dass** der Testgasdetektor (8) ein Massenspektrometer oder ein Quadrupol ist.

9. Vorrichtung nach einem der Ansprüche 1 bis 8, **dadurch gekennzeichnet, dass** das elektronische Steuerprogramm (11) außerdem eine Direktbetrieb-Testsequenz enthält, in der nur die Eingangsströmungssteuermittel (9") und die sekundären Strömungssteuermittel (7) geöffnet sind.

10. Verfahren zum Detektieren von Lecks durch Gegenstrommessung, in dem die Gase eines Objekts (1) durch eine mehrstufige Sekundärpumpe und eine Primärpumpe (5), die mit einem Förderanschluss der mehrstufigen Sekundärpumpe verbunden ist, gepumpt werden, wobei die mehrstufige Sekundärpumpe (6) mit mehreren Sauganschlüssen (9, 6a, 6b, 6c) verbunden ist, wovon ein sekundärer Sauganschluss (9) und wenigstens ein Zwischenanschluss (6b) einem Zwischenverdichtungsverhältnis in der mehrstufigen Sekundärpumpe (6) entsprechen, **dadurch gekennzeichnet, dass** es wenigstens einen Schritt des Pumpens mit hohem Durchsatz enthält, in dem wenigstens zwei Sauganschlüsse (9, 6b) der mehrstufigen Sekundärpumpe (6) mit dem zu testenden Objekt (1) verbunden sind.
